# EUROPEAN PATENT APPLICATION

(11) **EP 2 093 010 A2**
(43) Date of publication of application: **26.08.2009**
(21) Application number: 09152571.7
(22) Date of filing: 11.02.2009
(51) Int. Cl.: B23K 20/12, F16B 31/02, G01L 5/24

(54) **Fasteners With Welded Ultrasonic Stress Transducers**

(30) Priority: 19.02.2008 US 33382
(71) Applicant: General Electric Company, Schenectady, NY 12345 (US)
(72) Inventor: Nies, Jacob J., 8042 HA, Zwolle (NL); Hemmelmann, Jan E., 81667 Munich (DE)
(74) Representative: Bedford, Grant Richard

(57) **Abstract**

A method of mounting a stress transducer (2) to a fastener (4) includes securing the transducer (2) to a weld insert (6), and welding the insert (6) to the fastener (4).

## Description

The subject matter described here generally relates to measuring and testing of specimen stress or strain, and, more particularly, to a method and apparatus for welding ultrasonic stress transducers to a fastener.

As discussed in "Guide to Ultrasonic Inspection of Fasteners," by StressTel Ultrasonic Testing Equipment, now part of GE Inspection Technologies, their BOLTMIKE® system determines the load on a fastener by measuring the amount of time it takes for a sound wave to travel along a fastener's length, before and after a tensioning force is applied to the fastener. However, prior to measuring a fastener, it must be properly prepared for ultrasonic inspection. For example, a very flat, smooth surface is important for proper coupling of the transducer. A suitable couplant must be applied. Finally, consistent placement of the transducer on the bolt head or stud end improves the instrument's accuracy and repeatability.

Several methods have been used to ensure consistent transducer placement. The most common method utilizes a magnetic transducer which is placed in the center of the bolt's head. Glue-on ultrasonic tension sensors are available from MicroControl Inc. of Troy, Michigan and Intellifast Gmbh offers a permanent mounted transducer system. Intellifast's self-described plasma coating "Sputtering" procedure applies a permanent mounted piezo-electrical thin film layer on to the bolt as is apparently disclosed in World Intellectual Property Organization Publication Nos. WO2007124924 and WO2006015813. However, these and other conventional stress transducer configurations are often difficult, expensive, and time-consuming to implement.

These and other aspects of such conventional approaches are addressed here by providing, in various embodiments of the present invention, an apparatus and method of mounting a stress transducer to a fastener including securing the transducer to a weld insert, and welding the insert to the fastener.

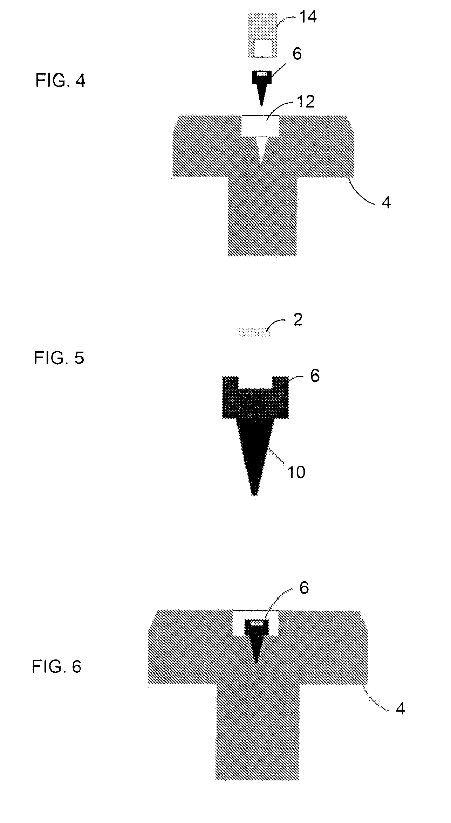

Various aspects of this technology invention will now be described with reference to the following figures ("FIGs.") which are not necessarily drawn to scale, but use the same reference numerals to designate corresponding parts throughout each of the several views, and in which:
Figure 1 is a schematic, exploded cross-sectional view of a method for mounting an ultrasonic stress transducer to a fastener.
Figure 2 is an enlarged view of the transducer and weld insert from Figure 1.
Figure 3 is a schematic, assembled cross-sectional view of the method shown in Figure 1.
Figure 4 is a schematic, exploded cross-sectional view of another method of mounting an ultrasonic stress transducer to a fastener.
Figure 5 is an enlarged view of the transducer and weld insert from Figure 4.
Figure 6 is a schematic, cross-sectional view of the assembled fastener shown in Figure 4.

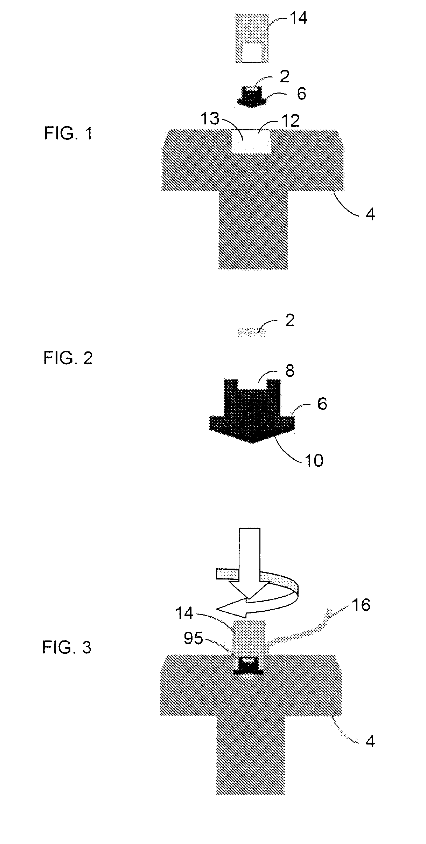

Figure 1 is a schematic, exploded cross-sectional view of a method of mounting a transducer 2 to one or both ends of a fastener 4. In the exemplary embodiments illustrated here, the transducer 2 is a stress transducer, such as an ultrasonic stress transducer, and the fastener 4 is a bolt. However, a variety of other transducers 2 and/or fasteners 4 may also be used, such as piezoelectric transducers, temperature transducers, radiation transducers, rods, pins, rivets, concrete reinforcing bar, and etc. The transducer 2 may include sensors and/or transmitter exciters. Alternatively, the exciter may be provided separate from the sensor. For example, the transmitter may not necessarily be secured to the fastener 4.
The transducer 2 is secured to a weld insert 6 as illustrated in more detail in Figure 2. For example, an insert cavity 8 may be formed in one end of the insert 6 for receiving the transducer 2. The other end of the insert 6 may further include a conical tip 10. However, other tip shapes may also be used, such as flat, hemispherical, or elliptical. The tip may also be of various lengths and/or cone angles as illustrated by the longer tip shown in Figures 4-6.
The tip 10 of the insert 6 may also include a material having a higher melting point than the material forming the remainder of the insert. The insert 6 may be formed from a variety of materials including a non-corroding material, such as a chromium alloy steel. Alternatively, or in addition, the insert 6 may be of a zinc alloy, such as for use with a zinc-plated bolt.
The fastener 4 may be provided with an optional fastener cavity 12 for receiving the tip 10 of the insert 6. The fastener cavity 12 may be filled with an optional anticorrosion agent 13, such as a suitable sealant or flux. The fastener cavity 12 may also be configured to conform to the shape of the tip 10 as illustrated in Figures 4-6.
The insert 6 and transducer 2 are secured to the fastener 4 by any welding process, such as friction welding, electrical resistance welding, brazing, and soldering. For example, as best illustrated in the friction welding process shown in Figure 3, the insert 6 with the transducer 2 are secured in a rotatable bit 14. The bit 14 is lowered toward the fastener cavity 12 and rotated at a suitable speed and pressure to melt at least the tip of the insert 6 and bond the insert to the fastener 4. A liquid 16 may also be provided to the fastener cavity 12 for cooling and/or flushing the welding process.
The technology described above provides various advantages over conventional fasteners with stress transducers. For example, the process is less complex, less expensive, and easier to implement than conventional techniques. Consequently, stress transducers can be applied to more bolts in a particular application that would otherwise require reliance upon a single reference bolt.
It should be emphasized that the embodiments described above, and particularly any "preferred" embodiments, are merely examples of various implementations that have been set forth here to provide a clear understanding of various aspects of this technology. It will be possible to alter many of these embodiments without substantially departing from scope of protection defined solely by the proper construction of the following claims.
Various aspects and embodiments of the present invention are now defined in the following numbered clauses:
   1. A method of mounting a stress transducer to a fastener, comprising:
      securing the transducer to a weld insert; and
      welding the insert to the fastener.
   2. The method recited in clause 1 wherein the welding is selected from the group consisting of friction welding, electrical resistance welding, brazing, and soldering.
   3. The method recited in clause 2, wherein the welding is friction welding.
   4. The method recited in any preceding clause, further comprising the step of forming a cavity in the fastener for receiving the transducer.
   5. The method recited in any preceding clause, further comprising the step of forming a cavity in the fastener for receiving the transducer.
   6. The method recited in any preceding clause, further comprising the step of applying an anticorrosion agent between the insert and the fastener.
   7. The method recited in any preceding clause, further comprising the step of applying an anticorrosion agent between the insert and the fastener.
   8. The method recited in any preceding clause, further comprising the step of applying an anticorrosion agent between the insert and the fastener.
   9. An apparatus, comprising:
      an insert for welding to a fastener; and
      a stress transducer secured to the insert.
   10. The apparatus recited in clause 9, wherein the insert further comprises
      an insert cavity at one end for receiving the transducer; and
      a conical tip at another end opposite from the one end.
   11. The apparatus recited in clause 9 or 10, wherein the one end of the insert comprises a material having a lower melting point than the fastener and a remainder of the insert.
   12. The apparatus recited in any of clauses 9 to 11, wherein the one end of the insert comprises a material having a lower melting point than the fastener and a remainder of the insert.
   13. The apparatus recited in any of clauses 9 to 12, further comprising a fastener to which the insert is welded.
   14. The apparatus recited in any of clauses 9 to 13, wherein the insert is friction welded to the fastener.
   15. The apparatus recited in any of clauses 9 to 14, wherein the fastener includes a fastener cavity for receiving the welded insert.
   16. The apparatus recited in any of clauses 9 to 15, further comprising a fastener to which the insert is welded.
   17. The apparatus recited in any of clauses 9 to 16, wherein the insert is friction welded to the fastener.
   18. The apparatus recited in any of clauses 9 to 17, wherein the fastener includes a fastener cavity for receiving the friction welded insert.
   19. The apparatus recited in any of clauses 9 to 18, further comprising an anticorrosion agent between the insert and the fastener.
   20. The apparatus recited in any of clauses 9 to 19, further comprising an anticorrosion agent between the insert and the fastener.

## Claims

1. A method of mounting a stress transducer (2) to a fastener (4), comprising:
securing the transducer to a weld insert (6); and
welding the insert (6) to the fastener (4).

2. The method recited in claim 1 wherein the welding is selected from the group consisting of friction welding, electrical resistance welding, brazing, and soldering.

3. The method recited in any preceding claim, wherein the welding is friction welding.

4. The method recited in any preceding claim, further comprising the step of forming a cavity (8) in the fastener (4) for receiving the transducer (2).

5. An apparatus, comprising:
an insert (6) for welding to a fastener (4); and
a stress transducer (2) secured to the insert (6).

6. The apparatus recited in claim 5, wherein the insert further comprises
an insert cavity (8) at one end for receiving the transducer (2); and
a conical tip (10) at another end opposite from the one end.

7. The apparatus recited in claim 5 or claim 6, wherein the conical tip (10) comprises a material having a lower melting point than the fastener and a remainder of the insert.

8. The apparatus recited in any of claims 5 to 7, further comprising a fastener (4) to which the insert (6) is welded.

9. The apparatus recited in any of claims 5 to 8, wherein the insert (6) is friction welded to the fastener (4).
